# EUROPEAN PATENT APPLICATION

(11) **EP 1 726 623 A1**
(43) Date of publication of application: **29.11.2006**
(21) Application number: 05720814.2
(22) Date of filing: 15.03.2005
(51) Int. Cl.: C08L 101/02, B82B 3/00, C08K 3/04

(54) **COMPOSITE MATERIAL, COMPOSITE CARBON MATERIAL AND METHOD FOR PRODUCING THOSE**

(30) Priority: 18.03.2004 JP 2004079268
(71) Applicant: Shinano Kenshi Kabushiki Kaisha, Nagano 386-0498 (JP)
(72) Inventor: HASHIZUME, Hitoshi, c/o Shinano Kenshi K.K., Chiisagata-gun, Nagano 3860498 (JP); SHIMIZU, Makoto, c/o Shinano Kenshi K.K., Chiisagata-gun, Nagano 3860498 (JP)
(74) Representative: Calderbank, Thomas Roger
(86) International application number: PCT/JP2005/004559
(87) International publication number: WO 2005/090481

(57) **Abstract**

The present invention provides a composite material and a carbonized composite material having high electric conductivities and heat conductivities, in each of which nanocarbons are uniformly mixed, and a method for producing the materials. The composite material of the present invention comprises: a high polymer, in which an atomic group including a heteroatom, such as nitrogen, oxygen or sulfur, exists in a main chain or a side chain; and nonocarbons. The carbonized composite material of the present invention is produced by burning the above described composite material.

## Description

### FIELD OF TECHNOLOGY

The present invention relates to a composite material, a carbonized composite material and a method for producing the materials.

### BACKGROUND TECHNOLOGY

Conventionally, electrically conductive paste, electrically conductive ink, electrically conductive film and heat conductive film are produced by mixing a substance having high electric conductivity, e.g., carbon black, silver, or a compound thereof with resin, an organic solvent or the like.
Patent Document 1: Japanese Patent Kokai-Gazette No. 2005-62835
Patent Document 2: Japanese Patent Kokai-Gazette No. 2005-54094
Patent Document 3: Japanese Patent Kokai-Gazette No. 2005-54095.
Patent Document 4: Japanese Patent Kohyo-Gazette No. 2002-544346.
Patent Document 5: Japanese Patent Kokai-Gazette No. 2000-63726.

### DISCLOSURE OF THE INVENTION

When an electric current passes through the substance having high electric conductivity or the substance is oxidized, the substance is sulfurated so that electric conductivity, heat conductivity and electromagnetic shielding performance get unstable, further a weight of-the substance is heavy so that uses of the substance are limited. In case of using a metal as the conductive substance, it has poor flexibility. On the other hand, in case of using carbon black as the conductive substance, it has enough flexibility but has low electric conductivity, low heat conductivity and poor electromagnetic shielding performance.

The present invention was conceived to solve the above described problems, and an object of the present invention is to provide a composite material and a carbonized composite material having good electric conductivities, heat conductivities and electromagnetic shielding performance, in each of which nanocarbons are uniformly mixed, and a method for producing the materials.

The composite material of the present invention comprises: a substance derived from a high polymer having a molar weight of 50-1,000,000, in which an atomic group including a heteroatom, such as nitrogen, oxygen or sulfur, exists in a main chain or a side chain; and nanocarbons.

The composite material of the present invention is produced by dispersing nanocarbons in a solution of a high polymer substance having a molar weight of 50-1,000,000, in which an atomic group including a heteroatom, such as nitrogen, oxygen or sulfur, exists in a main chain or a side chain, and drying the solution, so that the nanocarbons are incorporate in the high polymer substance.

The composite material is characterized by being formed into a film- or sheet-shape.

The composite material is characterized by being formed into a grain-shape.

The composite material is characterized in that a weight of nanocarbons with respect to that of the high polymer substance is 1-30 wt%.

The composite material is characterized in that the high polymer substance contains amino acid, protein made from amino acid or peptide.

The composite material is characterized in that the high polymer substance is made from a silk material.

The carbonized composite material of the present invention is produced by burning the above described composite material.

The carbonized composite material is characterized by being burned at temperature of 500-3000°C.

The method for producing the composite material comprises the steps of: dispersing nanocarbons in a solution of a high polymer substance having a molar weight of 50-5,000,000, in which an atomic group including a heteroatom, such as nitrogen, oxygen or sulfur, exists in a main chain or a side chain; and drying the solution, in which the nanocarbons are dispersed.

The method further comprises the step of applying a magnetic field to the solution, in which the nanocarbons are dispersed, so as to orientate the nanocarbons.

The method is characterized in that a weight of nanocarbons with respect to that of the high polymer substance is 1-30 wt%.

The method is characterized in that the high polymer substance contains amino acid, protein made from amino acid or peptide.

The method is characterized in that the high polymer substance is a silk material.

The method for producing the carbonized composite material comprises the steps of: dispersing nanocarbons in a solution of a high polymer substance, in which an atomic group including a heteroatom, such as nitrogen, oxygen or sulfur, exists in a main chain or a side chain; drying the solution, in which the nanocarbons are dispersed; and burning the dried substance.

The method is characterized in that the burning step includes the sub-steps of: primary-burning at low temperature; and secondary-burning at high temperature.

The method is characterized in that a weight of nanocarbons with respect to that of the high polymer substance is 1-30 wt%.

The method is characterized in that the high polymer substance contains amino acid, protein made from amino acid or peptide.

The method is characterized in that the high polymer substance is a silk material.

### EFFECTS OF THE INVENTION

In the present invention, the nanocarbons can be uniformly mixed, so that the composite material and the carbonized composite material having good electric conductivities, heat conductivities and electromagnetic shielding performance can be provided.

### BRIEF DESCRIPTION OF THE DRAWINGS

Fig. 1 is an explanation view of a composite material.
Fig. 2 is a raman spectrum chart of a burned body, which was formed by burning a coarse-grained silk at temperature of 2,000°C.
Fig. 3 is a raman spectrum chart of a burned body, which was formed by burning a coarse-grained silk at temperature of 700°C.
Fig. 4 is a raman spectrum chart of a burned body, which was formed by burning a coarse-grained silk at temperature of 1,000°C.
Fig. 5 is a raman spectrum chart of a burned body, which was formed by burning a coarse-grained silk at temperature of 1,400°C.
Fig. 6 is a SEM photograph of a composite material of Example 1.
Fig. 7 is a SEM photograph of the composite material of Example 1.
Fig. 8 is a SEM photograph of the composite material of Example 1.
Fig. 9 is a SEM photograph of a composite material of Example 2.
Fig. 10 is a SEM photograph of the composite material of Example 2.
Fig. 11 is a SEM photograph of the composite material of Example 2.
Fig. 12 is a SEM photograph of the composite material of Example 2.
Fig. 13 is a SEM photograph of a carbonized composite material formed by burning the composite material of Example 2.
Fig. 14 is a SEM photograph of the carbonized composite material formed by burning the composite material of Example 2.
Fig. 15 is a SEM photograph of the carbonized composite material formed by burning the composite material of Example 2.
Fig. 16 is a SEM photograph of the carbonized composite material formed by burning the composite material of Example 2.
Fig. 17 is a SEM photograph of a composite material of Example 4.
Fig. 18 is a SEM photograph of the composite material of Example 4.
Fig. 19 is a SEM photograph of the composite material of Example 4.
Fig. 20 is a SEM photograph of the composite material of Example 4.
Fig. 21 is a SEM photograph of a composite material of Example 5.

### PREFERRED EMBODIMENTS OF THE INVENTION

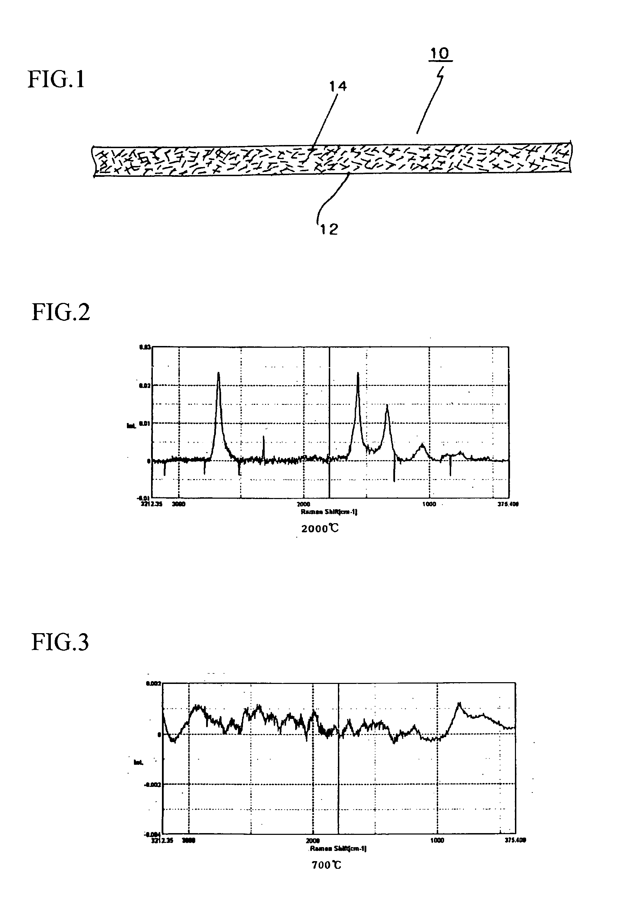

Fig. 1 is an explanation view of a sheet-shaped (including a film-shape) composite material 10, in which nanocarbons 14 are mixed with a high polymer substance 12, in which an atomic group including a heteroatom, such as nitrogen, oxygen or sulfur, exists in a main chain or a side chain.

Note that, a nanocarbon is a nanosize carbon such as single-layered, two-layered or multilayered carbon nanotube, cap stack-type carbon nanotube, carbon nanohorn or fullerene.

For example, the sheet-shaped composite material 10 is produced by the steps of: dispersing nanocarbons in a solution (a high polymer solution) derived from the above described high polymer substance having a molar weight of 50-5,000,000; spreading the solution, in which the nanocarbons are dispersed, on a proper substrate; and drying the solution at the room temperature or high temperature so as to form into the sheet-shape. To disperse the nanocarbons in the high polymer solution, supersonic waves may be applied to the solution in which the nonocarbons are added.

By applying a magnetic field to the solution, the fiber-shaped nanocarbons, e.g., carbon nanotubes, can be oriented in a prescribed direction. By drying the solution, the composite material 10, in which most of the nanocarbons are oriented in the prescribed direction, can be obtained.

The composite material 10 may be formed by dispersing nanocarbons in the high polymer solution and drying the solution including the nanocarbons, and it may be formed into a sheet-shape or a grain-shape; further, a sheet-shaped carbonized composite material can be obtained by burning the sheet-shaped composite material 10 at temperature of about 500-3,000°C. Electric conductivity of the high polymer can be increased by the burning process, and the nanocarbons originally have good electric conductivity, so the sheet-shaped carbonized composite material having good electric conductivity can be produced. By dispersing nanocarbons in the high polymer solution, drying the solution and burning the dried substance, the carbonized composite material having uniform electric conductivity, in which the nanocarbons are uniformly mixed, can be obtained.

The sheet-shaped carbonized composite material, which is produced by burning the composite material 10 in which the nanocarbons have been oriented in the prescribed direction by applying a magnetic field, has good heat conductivity too.

A fiber-shaped nanocarbon, e.g., a carbon nanotube, has heat conductive anisotropy, especially has excellent heat conductivity in an axial direction, but has low heat conductivity in radial directions. By orienting nanocarbons in the prescribed direction and burning, the carbonized composite material having excellent heat conductivity in the orienting direction of the nanocarbons can be produced.

In the above described embodiment, the composite material 10 is formed into the sheet-shape, further the high polymer solution, in which nanocarbons are dispersed, may be merely dried. The dried substance is formed into grains or a block, and the grain- or block-shaped dried substance is burned at temperature of 500-3,000°C, then the burned or carbonized substance is crushed to form into grain-shaped carbonized composite materials having desired sizes. Of course, the sheet-shaped carbonized composite material may be crushed to form into grains.

The grain-shaped carbonized composite material also has good electric conductivity. Therefore, it may be suitably used as a material of electrically conductive paste and electrically conductive ink. An electromagnetic shielding member can be produced by applying the electrically conductive paste or electrically conductive ink to a substrate or incorporating the same into the substrate.

By mixing the composite material with resin or metals, various materials having good electric conductivities and heat conductivities can be produced.

Note that, a proper weight of nanocarbons with respect to that of the high polymer substance is about 1-30 wt%, more preferably 5-10 wt%.

Silk materials may be used as the high polymer substance.

The silk materials include woven fabrics, knitted works, powders, cloth, strings, etc. made of threads of domesticated or wild silk worms. They may be used as single or in combination.

The silk materials have higher-order structures of protein, and various coordinating groups including amino acid residues exist in their surfaces (including inner faces of foldable structures).

Besides the above described silk materials, high polymers, in each of which an atomic group including a donor atom, such as nitrogen, oxygen or sulfur, exists in a main chain or a side chain, may be used as the high polymer substances.

For example, keratin, milk protein, corn protein, collagen, etc. may be used as the high polymer substances.

In the following description, the silk material is used as the high polymer substance.

The silk materials were burned, and solid state properties of the burned bodies were examined.

The silk materials were burned at temperature of about 500 - 3,000°C.

A burning atmosphere was an inert gas atmosphere, e.g., nitrogen gas atmosphere, argon gas atmosphere, or a vacuum atmosphere so as not to burn the silk materials to cinders.

The silk materials should be burned in stages without rapid burning. Further, the above described composite material should be burned by the same manner.

For example, each silk material was primary-burned in the inert gas atmosphere with low temperature rising rate of 100°C/hour or less, preferably 50°C/hour or less, until reaching a first temperature (e.g., 500°C), then the first temperature was maintained for several hours. The silk material was once cooled until reaching the room temperature, then the silk material was secondary-burned in the same atmosphere with low temperature rising rate of 100°C/hour or less, preferably 50°C/hour or less, until reaching a second temperature (e.g., 700°C) and the second temperature was maintained for several hours. Then, the silk material is cooled. Further, the silk material was tertiary-burned at final burning temperature (e.g., 2000°C) by the same manner so as to obtain a burned or carbonized object. Note that, the burning conditions are not limited to the above described examples, and they may be optionally changed on the basis of kinds of silk materials, functions of carbonized materials, etc..

By burning the silk material in stages and burning with the low temperature rising rate, rapid decomposition of the protein high-order structure, in which crystalline forms and noncrystalline forms of a dozen of amino acids are combined, could be avoided.

Fig. 2 is a raman spectrum chart of a burned body, which was produced by burning a coarse-grained silk at temperature of 2,000°C (the final burning temperature). Peaks were observed at 2681cm⁻¹, 1570cm⁻¹ and 1335cm⁻¹, so the coarse-grained silk was graphitized.

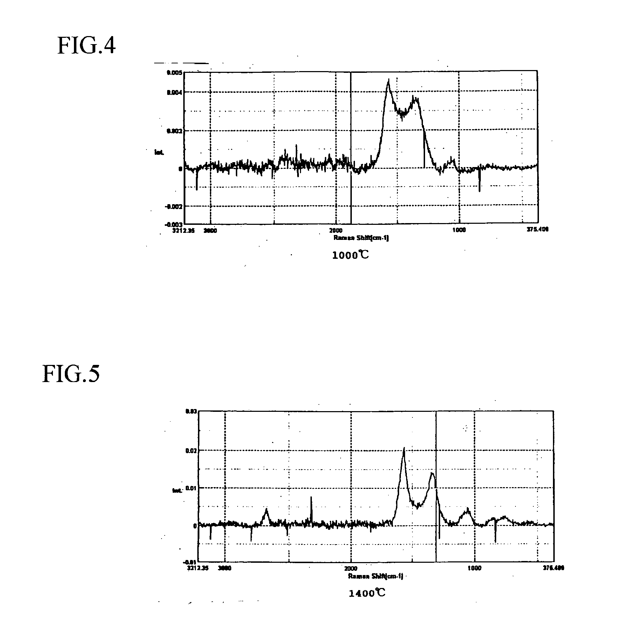

Figs. 3-5 are raman spectrum charts of burned bodies, which were produced by respectively burning coarse-grained silks at 700°C, 1,000°C and 1,400°C. By burning at 1,400°C, peaks were low but observed at the same three points.

By burning at 1,000°C or below, no peaks were observed, so the burned bodies were not graphitized and they do not have high electric conductivities.

Therefore, the silk materials, which will be used as electrically conductive materials, should be burned at high temperature, e.g., 1,000-3,000°C (the final burning temperature).

Specific resistances of the burned silk materials (woven cloth) burned at 1,400°C and 2,000 °C were measured, the results of the both samples (filaments of single yarns) were about 1 × 10⁻⁵(Ω · m), which was greater than that of graphite (4-7 × 10⁻⁷ Ω · m) but smaller than that of carbon (4 × 10⁻⁵), so they had good electric conductivities.

Therefore, it is clear that the carbonized composite material of the present invention, which is a composite material constituted by the burned silk material and nanocarbons, has good electric conductivity.

**Table 1**

| Elements | C | N | O | Na | Mg | Al | Si | P | S | Cl | K | Ca | Fe |
|---|---|---|---|---|---|---|---|---|---|---|---|---|---|
| Wt% | 66.1 | 27.4 | 2.1 | 0.1 | 0.3 | 0.1 | 0.3 | 0.1 | 0.1 | 0.1 | 0.1 | 32 | 02 |

Table 1 shows results of elemental analysis (semiquantative analysis) of a burned product, which was a knitted work made of silk of domesticated silkworms and which was burned in a nitrogen atmosphere at 700°C, performed by an electron beam micro analyzer.

Measuring conditions were as follows: accelerating voltage was 15 kV; irradiating current was 1 µA; and probe diameter was 100 µm. Note that, values in the table indicate tendency of detected elements but they are not guaranteed values.

According to Table 1, a large amount of nitrogen, i.e., 27.4 wt%, was remained. Further, other elements derived from amino acids were also remained.

By primary-burning the silk material at relatively low temperature, a large amount of elements, e.g., nitrogen elements, were remained. The nitrogen elements remained were derived from amino acid residues.

If the nitrogen elements are remained, the composite resin material can be suitably mixed with high dispersibility and adhesiveness.

### Example 1

A silk material of 240 g was added to a solution 11, which includes 65% of calcium chloride dihydrate, and dissolved therein for six hours at temperature of 95°C. After completing the dissolution, a silk protein solution was obtained by the steps of: filtering the solution to remove non-dissolved substances; demineralizing the filtered solution by a dialyzing membrane, whose molecular fraction was 300; and diluting the solution until reaching concentration of 3 %. Carbon nanotubes of 1 g were mixed with the silk protein solution of 3 ml, then supersonic waves were applied to the mixed solution for 30 minutes so as to disperse the carbon nanotubes therein.

The solution including the carbon nanotubes was applied on a plate (acrylic plate) and dried at the room temperature so as to obtain a composite material.

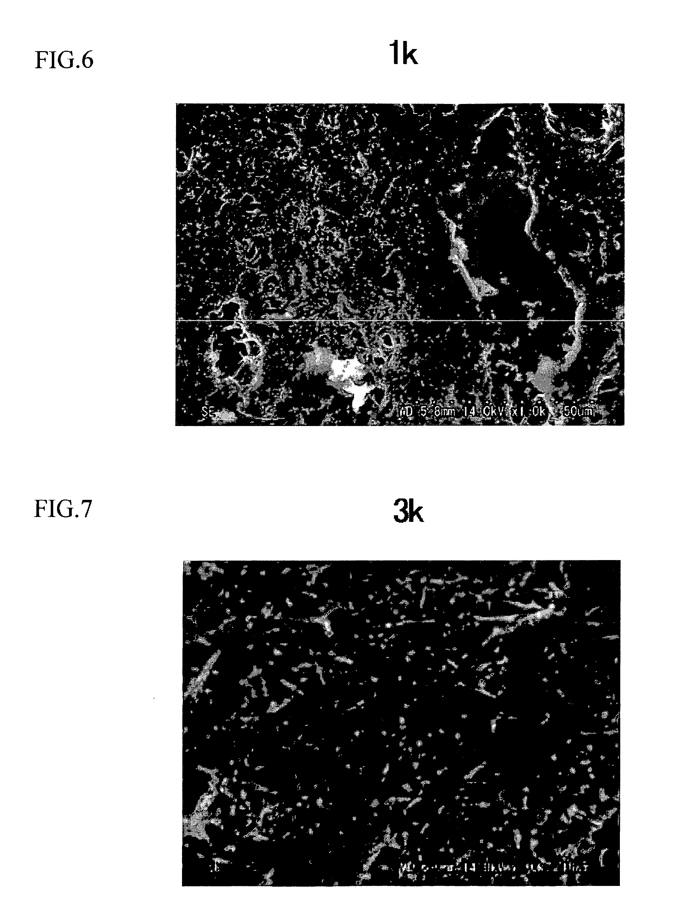

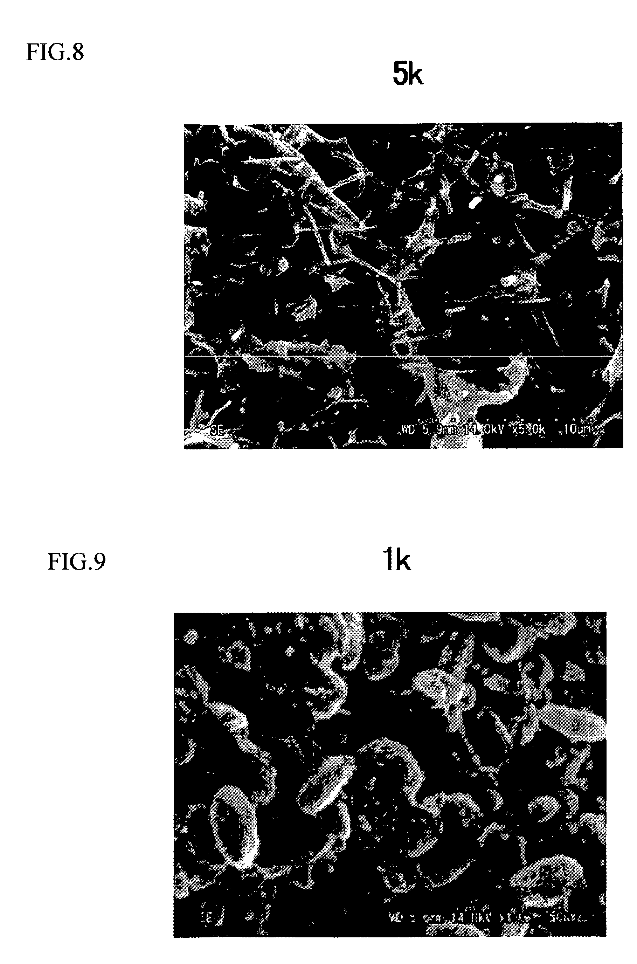

SEM photographs of the composite material are shown in Figs. 6-8. Note that, magnifications are indicated as "1K", etc.. For example, "1K" means 1 × 10³. As clearly shown in Fig. 8, the carbon nanotubes were uniformly dispersed in the composite material.

### Example 2

A silk material of 240 g was added to the solution 11, which includes 65% of calcium chloride dihydrate, and dissolved therein for six hours at temperature of 95°C. After completing the dissolution, a silk protein solution was obtained by the steps of: filtering the solution to remove non-dissolved substances; demineralizing the filtered solution by a dialyzing membrane, whose molecular fraction was 300; and diluting the solution until reaching concentration of 3 %. Then, a gel including carbon nanotubes (CNTs) was formed by the steps of: mixing CNTs of 1 g with the silk protein solution of 3 ml; applying supersonic waves to the mixed solution for 30 minutes so as to disperse the CNTs therein; heating the mixed solution; and recrystallizing silk.

The gel was dried by hot air of 80°C and formed into dry powders.

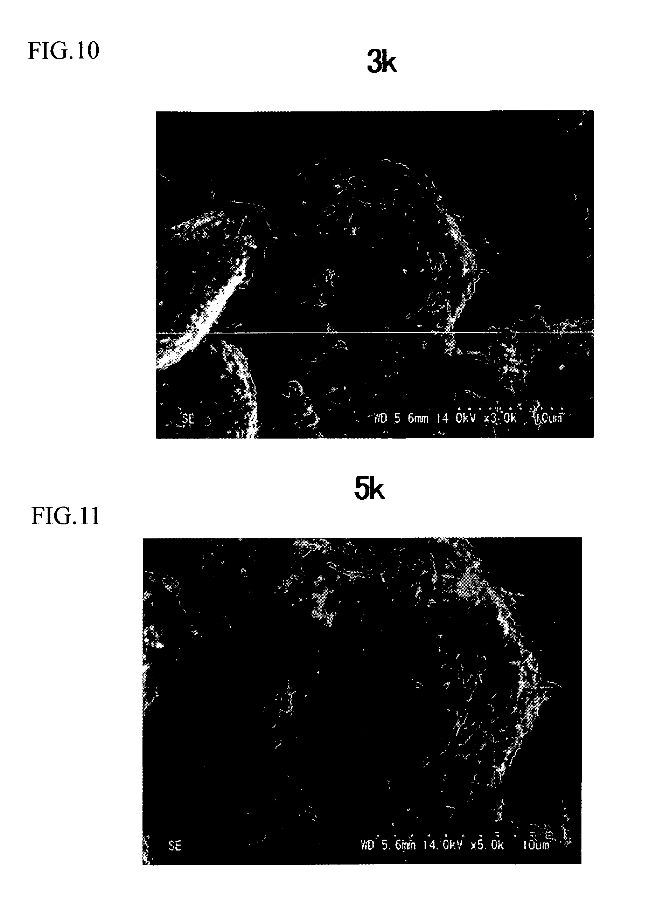

SEM photographs of the dry powders are shown in Figs. 9-12. As clearly shown in the photographs, the carbon nanotubes were uniformly dispersed in particles.

### Example 3

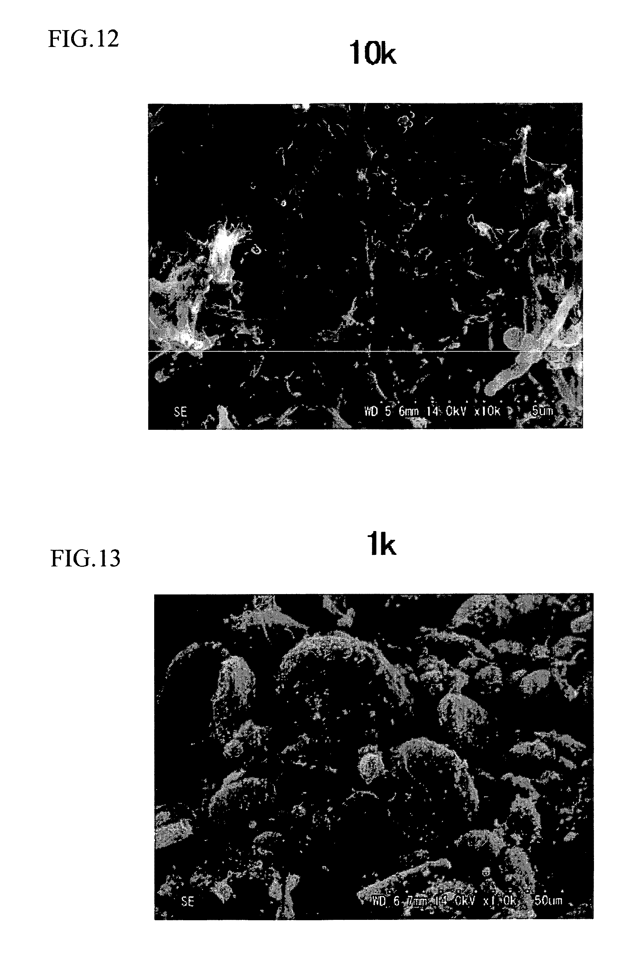

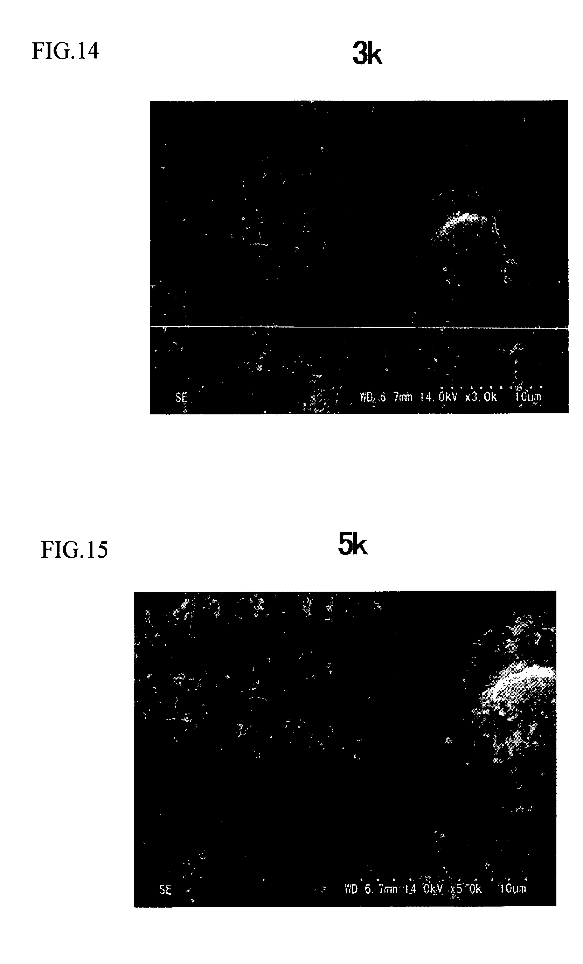

A carbonized composite material was produced by burning the powders of Example 2, in an inert gas atmosphere, at temperature of 700°C. SEM photographs of the carbonized composite material are shown in Figs. 13-16.

The carbonized composite material and epoxy resin, whose weight ratio was 2:1, were mixed to produce a composite resin material. Heat conductivity of the composite resin material was measured, by laser flash method, at the room temperature, and the result was 11 W/m · k.

Note that, a carbonized material, which was produced by burning a silk material (a coarse-grained silk) at temperature of 700°C, and epoxy resin, whose weight ratio was 2:1, were mixed to produce a composite resin material, then heat conductivity of the composite resin material was measured, by laser flash method, at the room temperature, and the result was 0.2 W/m · k.

The heat conductivity of the carbonized composite material of Example 3 was higher than that of the composite material formed by mixing the mere carbonized silk material with the resin.

The heat conductivity of the carbonized composite material can be further increased by selecting kinds of nanocarbons, mixture ratio of nanocarbons and a carbonized silk material, kinds of resin, burning temperature, etc..

### Example 4

A silk material of 240 g was added to the solution 11, which includes 65% of calcium chloride dihydrate, and dissolved therein for six hours at temperature of 95°C. After completing the dissolution, a silk peptide solution was obtained by the steps of: adding protease of 1 g to the solution; maintaining temperature of the solution at 50°C for 20 hour; filtering the solution to remove non-dissolved substances; demineralizing the filtered solution by a dialyzing membrane, whose molecular fraction was 300; and diluting the solution until reaching concentration of 10 %. Then, carbon nanotubes of 1 g was mixed with the silk peptide solution of 5 ml, then supersonic waves were applied to the mixed solution for 30 minutes so as to disperse the CNTs therein.

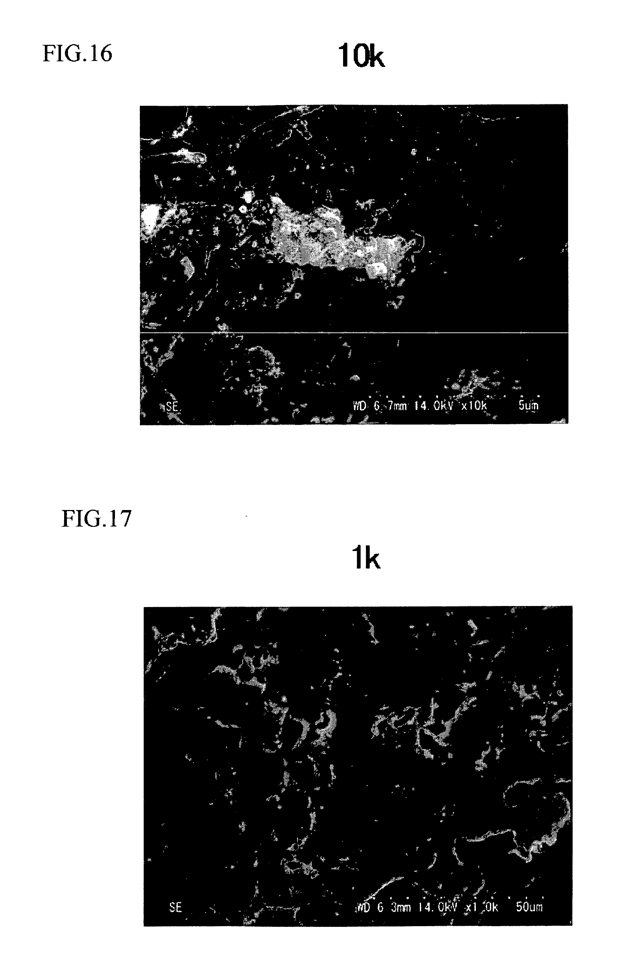

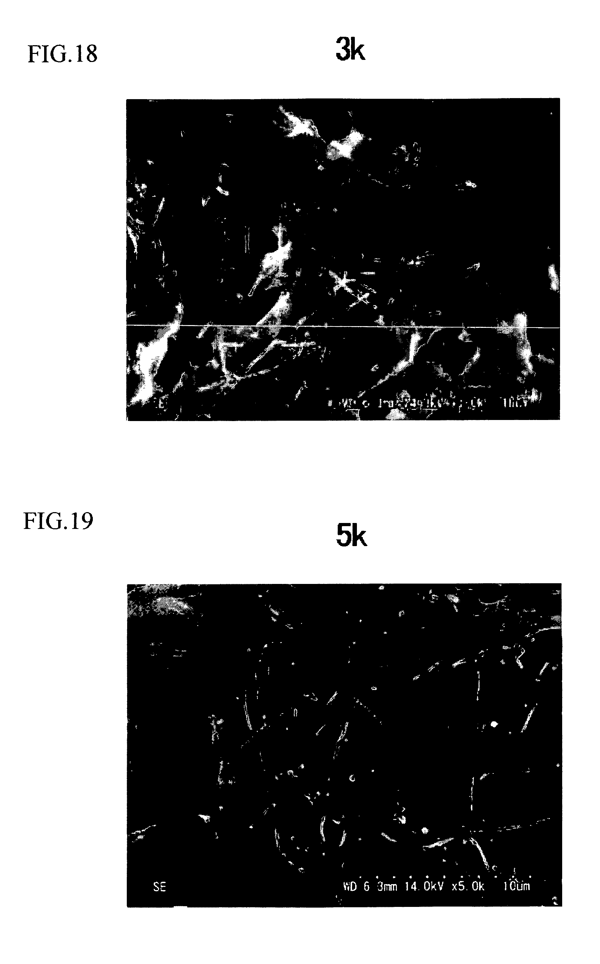

A magnetic field of four tesla was applied to the solution, then the solution was applied on a plate (acrylic plate) and dried at the room temperature so as to obtain a sheet-shaped composite material. SEM photographs of the composite material are shown in Figs. 17-20. As clearly shown in the photographs, most of the CNTs were oriented in a certain direction.

### Example 5

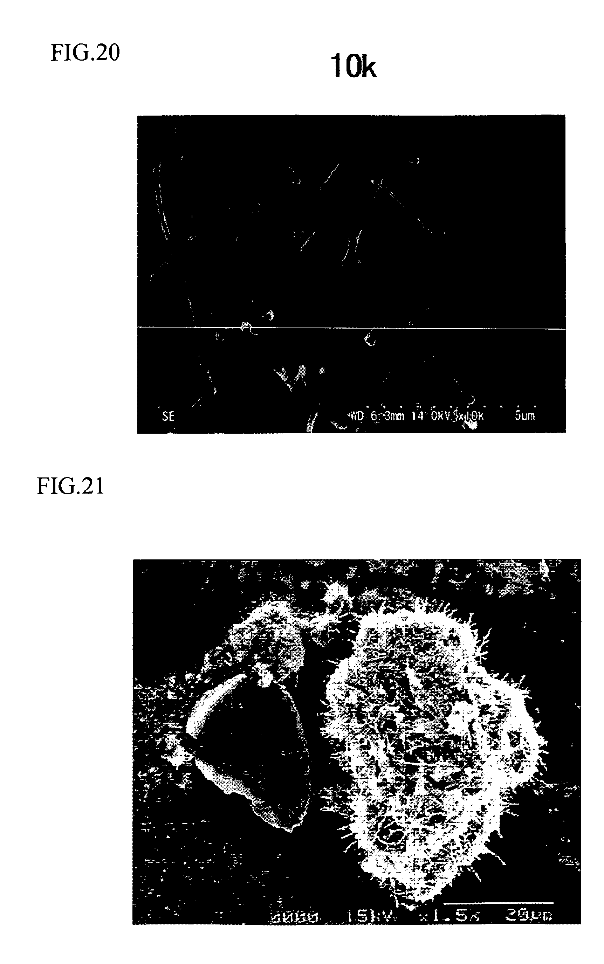

Two-layered carbon nanotubes of 1 g was mixed with 5 ml of the silk peptide solution of Example 4, then supersonic waves were applied to the mixed solution for 30 minutes so as to disperse the CNTs therein. Grain-shaped carbonized composite materials were produced by the steps of: applying the solution on a plate; drying the solution by hot air of 60°C; primary-burning in an inert gas atmosphere at temperature of 700°C; secondary-burning at temperature of 1,400°C; and crushing the carbonized substance. An SEM photograph of the grain-shaped carbonized composite material is shown in Fig. 21.

### Example 6

Powder resistance of a carbonized composite material was measured under the following conditions.

A cylindrical member having an inner diameter of 4.5 cm, which was made of an insulating material, was filled with the composite powders of Example 5, a pressure of 500 kg/cm² was applied to the composite powders from the upper side until thickness of the composite powders reached 2 mm, and an electric current of 10 mA was applied to the composite powders with maintaining that pressure; the resistance was 18.02 × 10⁻⁵Ω · m.

### Comparative Example 1

A cylindrical member having an inner diameter of 4.5 cm, which was made of an insulating material, was filled with copper electrolytic powders (particle diameters 2-3 µm), a pressure of 500 kg/cm² was applied to the powders from the upper side until thickness of the powders reached 2 mm, and an electric current of 1 A was applied to the powders with maintaining that pressure; the resistance was 19.29 × 10⁻⁵Ω·m. Note that, in case of copper, an oxide film was formed by applying an electric current of 10 mA, thus the resistance was measured with such high current value so as not to badly influence the resistance.

### Comparative Example 2

A cylindrical member having an inner diameter of 4.5 cm, which was made of an insulating material, was filled with graphite, a pressure of 500 kg/cm² was applied to the graphite from the upper side until thickness of the graphite reached 2 mm, and an electric current of 10 mA was applied to the graphite with maintaining that pressure; the resistance was 44.82 × 10⁻⁵Ω · m. Note that, in case of copper, an oxide film was formed by applying an electric current of 10 mA, thus the resistance was measured with such high current value so as not to badly influence the resistance.

As described above, the composite powders of the example had low resistance and high electric conductivity. Since the composite powders had high electric conductivity, it had high electromagnetic shielding performance.

The electric conductivity of the carbonized composite material can be further increased by selecting kinds of nanocarbons, mixture ratio of nanocarbons and a carbonized silk material, kinds of resin, burning temperature, etc..

## Claims

1. A composite material comprising: a substance derived from a high polymer having a molar weight of 50-1,000,000, in which an atomic group including a heteroatom, such as nitrogen, oxygen or sulfur, exists in a main chain or a side chain; and nanocarbons.

2. A composite material produced by dispersing nanocarbons in a solution of a high polymer substance having a molar weight of 50-1,000,000, in which an atomic group including a heteroatom, such as nitrogen, oxygen or sulfur, exists in a main chain or a side chain, and drying the solution, whereby the nanocarbons are incorporate in the high polymer substance.

3. The composite material according to claim 1 or 2, wherein the composite material is formed into a film- or sheet-shape.

4. The composite material according to claim 1 or 2, wherein the composite material is formed into a grain-shape.

5. The composite material according to one of claims 1-4, wherein a weight of nanocarbons with respect to that of the high polymer substance is 1-30 wt%.

6. The composite material according to one of claims 1-5, wherein the high polymer substance contains amino acid, protein made from amino acid or peptide.

7. The composite material according to one of claims 1-5, wherein the high polymer substance is made from a silk material.

8. A carbonized composite material produced by burning the composite material according to one of claims 1-7.

9. The carbonized composite material according to claim 8, wherein the composite material is burned at temperature of 500-3000°C.

10. A method for producing a composite material,
comprising the steps of:
dispersing nanocarbons in a solution of a high polymer substance having a molar weight of 50-5,000,000, in which an atomic group including a heteroatom, such as nitrogen, oxygen or sulfur, exists in a main chain or a side chain; and
drying the solution, in which the nanocarbons are dispersed.

11. The method according to claim 10, further comprising the step of applying a magnetic field to the solution, in which the nanocarbons are dispersed, so as to orientate the nanocarbons.

12. The method according to claim 10 or 11, wherein a weight of nanocarbons with respect to that of the high polymer substance is 1-30 wt%.

13. The method according to one of claims 10-12, wherein the high polymer substance contains amino acid, protein made from amino acid or peptide.

14. The method according to one of claims 10-12, wherein the high polymer substance is a silk material.

15. A method for producing a carbonized composite material,
comprising the steps of:
dispersing nanocarbons in a solution of a high polymer substance, in which an atomic group including a heteroatom, such as nitrogen, oxygen or sulfur, exists in a main chain or a side chain;
drying the solution, in which the nanocarbons are dispersed; and
burning the dried substance.

16. The method according to claim 15, wherein the burning step includes the sub-steps of:
primary-burning at low temperature; and
secondary-burning at high temperature.

17. The method according to claim 15 or 16, wherein a weight of nanocarbons with respect to that of the high polymer substance is 1-30 wt%.

18. The method according to one of claims 15-17, wherein the high polymer substance contains amino acid, protein made from amino acid or peptide.

19. The method according to one of claims 15-17, wherein the high polymer substance is a silk material.
